# EUROPEAN PATENT APPLICATION

(11) **EP 4 654 147 A1**
(43) Date of publication of application: **26.11.2025**
(21) Application number: 25177566.4
(22) Date of filing: 20.05.2025
(51) Int. Cl.: G06T 15/20

(54) **METHOD AND SYSTEM FOR GENERATING SYNTHETIC IMAGE USING GEOGRAPHIC INFORMATION**

(30) Priority: 22.05.2024 KR 20240066398
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); SUNG, Myungchul, 06038 Seoul (KR); GWEON, Sungan, 06038 Seoul (KR); LEE, Kangsoo, 06038 Seoul (KR); LEE, Seongjin, 06038 Seoul (KR); YOU, Dongmin, 06038 Seoul (KR); HEO, Hoyeong, 06038 Seoul (KR); JO, Hanseok, 06038 Seoul (KR); LEE, Hwayoon, 06038 Seoul (KR)
(74) Representative: Studio Torta S.p.A.

(57) **Abstract**

A method for generating a synthetic image includes obtaining first location information and first directional information associated with the first location information, obtaining a three-dimensional (3D) semantic model associated with the first location information and the first directional information, generating first content information representing structural information of objects to be generated in a first synthetic image based on the first location information, the first directional information, and the 3D semantic model, generating the first synthetic image based on the first content information using an artificial neural network model, and outputting the generated first synthetic image.

## Description

### BACKGROUND

### Field

The present disclosure relates to a method and system for generating a synthetic image, and more particularly, to a method for generating a viewpoint synthetic image using geographic information and a system for the same.

### Description of Related Art

AI (Artificial Intelligence) technology is a technology that develops a system that makes intelligent decisions by learning a large amount of data and recognizing patterns using machine learning and deep learning technologies, and it is utilized in various fields such as predictive analysis, autonomous driving, medical diagnosis, language processing, and image generation.

There are various technologies for generating an image based on geographic information. First, in the case of a satellite image-based image generation technology, although terrain information is provided through satellite images, the visualization is focused on a top view point, so it may be difficult to satisfy visualization demands at a specific angle or view point. Second, in the case of a three-dimensional model-based image generation technology, it is difficult to obtain realistic images, and the visualization is limited to a pre-modeled local environment. Third, a Geographic Information System (GIS) is a useful technology for collecting, storing, analyzing, and managing geographic data and is useful for obtaining detailed information including satellite information and three-dimensional models regarding a specific location, but it lacks realistic representation and is mainly oriented toward data or statistics, so it has limited versatility and can be difficult to intuitively understand.

In addition, reproduced data through existing geographic information may be difficult to utilize in training an artificial neural network model. Accordingly, there is a need for a method that improves this.

### SUMMARY

The present disclosure provides a method and system for generating a synthetic image to solve the above problems.

The present disclosure can be implemented in various ways, including a method, an apparatus (system), or a non-transitory computer-readable recording medium storing computer-readable instructions.

In some implementations, a method for generating a synthetic image performed by at least one processor may include obtaining first location information and first directional information associated with the first location information, obtaining a three-dimensional (3D) semantic model associated with the first location information and the first directional information, generating first content information representing structural information of objects to be generated in a first synthetic image based on the first location information, the first directional information, and the 3D semantic model, generating the first synthetic image based on the first content information using an artificial neural network model, and outputting the generated first synthetic image, wherein the 3D semantic model may include 3D structural data and semantic data.

In some implementations, the first synthetic image is a view synthesis image viewed from a position associated with the first location information in a direction associated with the first directional information.

In some implementations, the method may further include receiving at least one of weather information, time information, or image type information associated with the first synthetic image to be generated, wherein the generating the first synthetic image may include generating the first synthetic image based on the first content information and the at least one of the weather information, the time information, or the image type information using the artificial neural network model.

In some implementations, the method may further include obtaining second location information and second directional information associated with the second location information, generating second content information representing structural information of objects to be generated in a second synthetic image based on the second location information, the second directional information, and the 3D semantic model, generating the second synthetic image based on the first synthetic image and the second content information using the artificial neural network model, and outputting the generated second synthetic image.

In some implementations, the method may further include receiving a camera movement path, generating sequential content information based on the first location information, the first directional information, the camera movement path, and the 3D semantic model, generating a plurality of sequential synthetic images based on the first synthetic image and the sequential content information using the artificial neural network model, and outputting the plurality of sequential synthetic images.

In some implementations, the method may further include obtaining a Digital Elevation Model (DEM) associated with the first location information and the first directional information, obtaining satellite geographic information data associated with the first location information and the first directional information, and generating the 3D semantic model based on the DEM and the satellite geographic information data, wherein the satellite geographic information data may include semantic data viewed from above.

In some implementations, at least a portion of the semantic data in the 3D semantic model is configured to vary according to a target time.

In some implementations, the method may further include receiving a modification prompt for changing at least a portion of the structural information of objects in the first content information, wherein the generating the first synthetic image may include generating the first synthetic image based on the first content information and the modification prompt using the artificial neural network model.

In some implementations, a non-transitory computer-readable storage medium may be provided. The non-transitory computer-readable storage medium may store computer-readable instructions, which when executed by at least one processor, cause the processor to obtain first location information and first directional information associated with the first location information, obtain a three-dimensional (3D) semantic model associated with the first location information and the first directional information, generate first content information representing structural information of objects to be generated in a first synthetic image based on the first location information, the first directional information, and the 3D semantic model, generate the first synthetic image based on the first content information using an artificial neural network model, and output the generated first synthetic image, wherein the 3D semantic model may include 3D structural data and semantic data.

In some implementations, an information processing system may include a memory, and at least one processor connected to the memory and configured to execute computer-readable instructions stored in the memory. The at least one processor is configured to obtain first location information and first directional information associated with the first location information, obtain a three-dimensional (3D) semantic model associated with the first location information and the first directional information, generate first content information representing structural information of objects to be generated in a first synthetic image based on the first location information, the first directional information, and the 3D semantic model, generate the first synthetic image based on the first content information using an artificial neural network model, and output the generated first synthetic image, wherein the 3D semantic model may include 3D structural data and semantic data.

In some implementations, the at least one processor is further configured to receive at least one of weather information, time information, or image type information associated with the first synthetic image to be generated, and generate the first synthetic image based on the first content information and the at least one of the weather information, the time information, or the image type information using the artificial neural network model.

In some implementations, the at least one processor is further configured to obtain second location information and second directional information associated with the second location information, generate second content information representing structural information of objects to be generated in a second synthetic image based on the second location information, the second directional information, and the 3D semantic model, generate the second synthetic image based on the first synthetic image and the second content information using the artificial neural network model, and output the generated second synthetic image.

In some implementations, the at least one processor is further configured to receive a camera movement path, generate sequential content information based on the first location information, the first directional information, the camera movement path, and the 3D semantic model, generate a plurality of sequential synthetic images based on the first synthetic image and the sequential content information using the artificial neural network model, and output the plurality of sequential synthetic images.

In some implementations, the at least one processor is further configured to receive a modification prompt for changing at least a portion of the structural information of objects in the first content information, and generate the first synthetic image based on the first content information and the modification prompt using the artificial neural network model.

According to some aspects of the present disclosure, it is possible to visualize a realistic terrain from a specific latitude, longitude, and view point desired by a user in two-dimensional images or video.

According to some aspects of the present disclosure, it is possible to generate images that can be edited with various conditions set through an artificial neural network model.

The effects of the present disclosure are not limited to the above-mentioned effects, and other effects not mentioned will be clearly understood by those of ordinary skill in the art to which the present disclosure pertains based on the descriptions of the claims.

### BRIEF DESCRIPTION OF THE DRAWINGS

Embodiment(s) of the present disclosure will be described below with reference to the accompanying drawings, in which like reference numerals refer to like elements, but are not limited thereto.
FIG. 1 illustrates an overall schematic diagram of an image generation system that generates a synthetic image based on a plurality of pieces of information.
FIG. 2 illustrates a schematic diagram of a configuration in which an information processing system is connected to a plurality of user terminals to be in communication so as to generate a synthetic image according to an example of the present disclosure.
FIG. 3 illustrates a block diagram of an internal configuration of a user terminal and an information processing system according to an example of the present disclosure.
FIG. 4 illustrates a diagram for schematically explaining a process of generating a synthetic image according to an example of the present disclosure.
FIG. 5 illustrates a diagram for schematically explaining a process of generating a plurality of synthetic images according to an example of the present disclosure.
FIG. 6 is a diagram for specifically explaining a method for generating a synthetic image according to an example of the present disclosure.
FIG. 7 illustrates a diagram for explaining a method for generating a subsequent synthetic image based on a previous synthetic image according to an example of the present disclosure.
FIG. 8 illustrates a diagram for explaining a method for generating a subsequent synthetic image based on a previous synthetic image and optical flow according to an example of the present disclosure.
FIG. 9 illustrates a diagram for explaining a method for outputting a plurality of sequential synthetic images based on a plurality of pieces of sequential content information using an artificial neural network model according to an example of the present disclosure.
FIG. 10 illustrates a flowchart of a synthetic image generation method according to an example of the present disclosure.

### DETAILED DESCRIPTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Accordingly, the terms used in this disclosure should be defined based on the meaning of the term and the overall content of the present disclosure, rather than simply the name of the term.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it is intended as meaning that the portion may additionally comprise (or include or have) another component, rather than excluding the same, unless specified to the contrary.

Further, the term "module" or "unit" used herein refers to a software or hardware component, and "module" or "unit" performs certain roles. However, the meaning of the "module" or "unit" is not limited to software or hardware. The "module" or "unit" may be configured to be in an addressable storage medium or configured to play one or more processors. Accordingly, as an example, the "module" or "unit" may include components such as software components, object-oriented software components, class components, and task components, and at least one of processes, functions, attributes, procedures, subroutines, program code segments, drivers, firmware, micro-codes, circuits, data, database, data structures, tables, arrays, and variables. Furthermore, functions provided in the components and the "modules" or "units" may be combined into a smaller number of components and "modules" or "units", or further divided into additional components and "modules" or "units."

A "module" or "unit" may be implemented as a processor and a memory, or may be implemented as a circuit (circuitry). Terms such as circuit and circuitry may refer to circuits in hardware, but may also refer to circuits in software. The "processor" should be interpreted broadly to encompass a general-purpose processor, a central processing unit (CPU), a microprocessor, a digital signal processor (DSP), a neural processing unit (NPU), a controller, a microcontroller, a state machine, etc. Under some circumstances, the "processor" may refer to an application-specific integrated circuit (ASIC), a programmable logic device (PLD), a field-programmable gate array (FPGA), etc. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, etc. The memory is said to be in electronic communication with a processor if the processor can read information from and/or write information to the memory. The memory integrated with the processor is in electronic communication with the processor.

In the present disclosure, a "system" may include at least one of a server device and a cloud device, but is not limited thereto. For example, the system may be configured of one or more server devices. In another example, the system may be configured of one or more cloud devices. In yet another example, the system may be configured and operated such that a server device and a cloud device operate together.

In the present disclosure, a "display" may refer to any display device associated with a computing device. For example, it may refer to any display device capable of displaying any information/data controlled by, or provided from, the computing device.

In the present disclosure, an "artificial neural network model" may refer to a model that includes one or more artificial neural networks composed of an input layer, a plurality of hidden layers, and an output layer to infer an answer for a given input. Each layer may include a plurality of nodes.

In the present disclosure, "content information" may be information representing structural information (e.g., category information, shape information, location information of objects) of backgrounds and/or objects in an image. For example, the content information may include semantic segmentation information, panoptic segmentation information, instance segmentation information, SAM (Segmentation Anything Model) result information, bounding box information, edge information, depth information, and so forth.

In the present disclosure, a "domain style" refers to visual characteristics and/or artistic styles of an image and may indicate a unique combination of various visual elements such as the camera's FOV (Field Of View), camera parameters, the color, texture, pattern, shape of the image, and the overall aesthetic quality of the image. For example, the domain style of an image may include a virtual domain style such as computer graphics (e.g., computer game graphics) or a real-world domain style taken by a specific camera in the real world. If the cameras used to capture the real world differ, images taken by each camera may have different domain styles according to various characteristics of each camera.

In the present disclosure, "image type information" may include information indicating a type related to an image's shooting environment and/or generation environment. By way of example, it may include type information such as an RGB image, an infrared (IR) image, a Synthetic Aperture Radar (SAR) image, or a grayscale image, but is not limited thereto.

In addition, terms such as first, second, A, B, (a), (b), etc. used in the following examples are only used to distinguish certain components from other components, and the nature, sequence, order, etc. of the components are not limited by the terms.

In addition, in the following examples, if a certain component is stated as being "connected," "combined" or "coupled" to another component, it is to be understood that there may be yet another intervening component "connected," "combined" or "coupled" between the two components, although the two components may also be directly connected or coupled to each other.

In addition, as used in the following examples, "comprise" and/or "comprising" does not foreclose the presence or addition of one or more other elements, steps, operations, and/or devices in addition to the recited elements, steps, operations, or devices.

Hereinafter, various examples of the present disclosure will be described in detail with reference to the accompanying drawings.

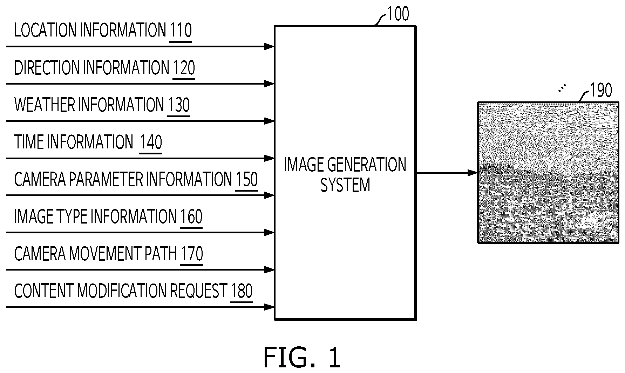

FIG. 1 illustrates an overall schematic diagram of an image generation system 100 that generates a synthetic image 190 based on a plurality of pieces of information, such as location information 110, directional information 120, weather information 130, time information 140, camera parameter information 150, image type information 160, a camera movement path 170, and a content modification request 180.

The location information 110 may be information for specifying a location at which the synthetic image 190 is to be generated, and may include latitude, longitude, and information on a searchable location (e.g., a landmark), but is not limited thereto.

The directional information 120 is information associated with the location information 110 and may include the direction of viewing an object at a specific location or the direction of viewing from a specific location, and may include angle information for specifying the direction.

In an example, when the image generation system 100 generates a synthetic image from a position associated with the location information 110 in a direction associated with the directional information 120 for viewing a specific object, the location information 110 and the directional information 120 may be received as inputs.

The weather information 130 may be information on weather conditions, such as temperature, precipitation, humidity, wind, atmospheric pressure, clouds, sunrise time, and/or sunset time, or weather condition information based on such conditions.

The time information 140 may include time information for a specific area or location, and may include Coordinated Universal Time (UTC), but is not limited thereto.

The camera parameter information 150 may include intrinsic and/or extrinsic parameters of a camera, and parameters related to resolution, sensor size, exposure settings, and the like. Here, the intrinsic parameters may be related to focal length, principal point, lens distortion, etc., and the extrinsic parameters may include parameters related to camera position and orientation, but are not limited thereto.

As described above, the image type information 160 may include information indicating the type related to the image's shooting environment and/or generation environment.

The camera movement path 170 may be associated with the location information 110 and include information indicating a moving path of a camera. The camera movement path 170 may be used when generating a plurality of sequential synthetic images, but the present disclosure is not limited thereto.

The content modification request 180 may include request information for changing structural information of backgrounds and/or objects in an image.

The image generation system 100 may receive at least some of the plurality of pieces of information 110 to 180 described above and generate the synthetic image 190. Here, the synthetic image 190 may be generated in a real-world domain style, and a user's desired specific environment (for example, weather conditions, application of special shooting techniques, seasons, vegetation changes, etc.) may be reflected to generate various types of the synthetic image 190. Furthermore, by continuously generating images through the image generation system 100, it is possible to generate a synthetic video.

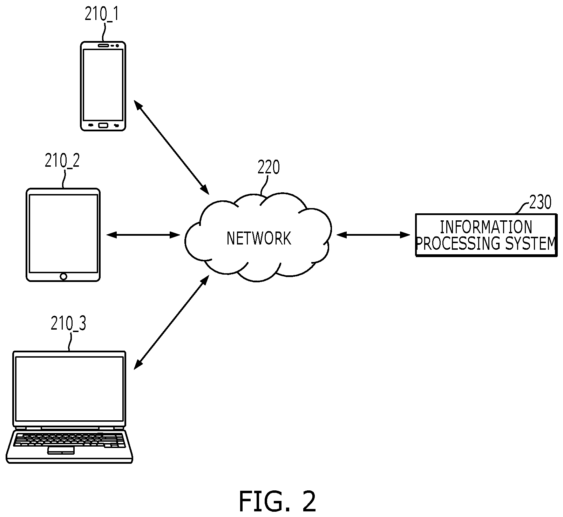

FIG. 2 illustrates a schematic diagram of a configuration in which an information processing system 230 is connected to a plurality of user terminals 210_1, 210_2, and 210_3 to be in communication so as to generate a synthetic image according to an example of the present disclosure. As shown, the plurality of user terminals 210_1, 210_2, and 210_3 may be connected to the information processing system 230, which can generate a synthetic image, through a network 220. Here, the plurality of user terminals 210_1, 210_2, and 210_3 may be terminals of users who receive the generated synthetic image.

In an example, the information processing system 230 may include one or more server devices and/or databases or one or more distributed computing devices and/or distributed databases based on a cloud computing service that can store, provide, and execute computer-executable programs (e.g., downloadable applications) and data related to generating a synthetic image.

The synthetic image provided by the information processing system 230 may be provided to users via an image generation application, a web browser, or a web browser extension program installed on each of the plurality of user terminals 210_1, 210_2, and 210_3. For example, the information processing system 230 may provide information corresponding to a synthetic image generation request received from the user terminals 210_1, 210_2, and 210_3 or perform corresponding processing through an image generation application.

The plurality of user terminals 210_1, 210_2, and 210_3 may communicate with the information processing system 230 via the network 220. The network 220 may be configured to enable communication between the plurality of user terminals 210_1, 210_2, and 210_3 and the information processing system 230. Depending on the installation environment, the network 220 may include, for example, a wired network such as Ethernet, a wired home network (Power Line Communication), a telephone line communication device, or RS-serial communication, a wireless network such as a mobile communication network, WLAN (Wireless LAN), Wi-Fi, Bluetooth, or ZigBee, or a combination thereof. The communication method is not limited, and short-range wireless communication between user terminals 210_1, 210_2, and 210_3 may also be included in addition to communication methods using communication networks (e.g., a mobile communication network, wired internet, wireless internet, broadcasting network, satellite network, etc.) that may be included in the network 220.

In FIG. 2, the mobile phone terminal 210_1, the tablet terminal 210_2, and the PC terminal 210_3 are shown as examples of user terminals, but the present disclosure is not limited thereto, and the user terminals 210_1, 210_2, and 210_3 may be any computing devices capable of wired and/or wireless communication and capable of running an image generation service application or web browser, or having such an application or browser installed. For example, the user terminal may include an AI speaker, a smartphone, a mobile phone, a navigation system, a computer, a notebook, a digital broadcasting terminal, a PDA (Personal Digital Assistant), a PMP (Portable Multimedia Player), a tablet PC, a game console, a wearable device, an IoT (internet of things) device, a VR (virtual reality) device, an AR (augmented reality) device, a set-top box, and so forth. Furthermore, although FIG. 2 illustrates three user terminals 210_1, 210_2, and 210_3 communicating with the information processing system 230 via the network 220, the present disclosure is not limited thereto, and a different number of user terminals may be configured to communicate with the information processing system 230 via the network 220.

In FIG. 2, a configuration is schematically illustrated in which each user terminal 210_1, 210_2, and 210_3 communicates with the information processing system 230 and receives the generated synthetic image, but the present disclosure is not limited thereto. For example, it is possible for each user terminal 210_1, 210_2, and 210_3 to generate the synthetic image directly without communicating with the information processing system 230.

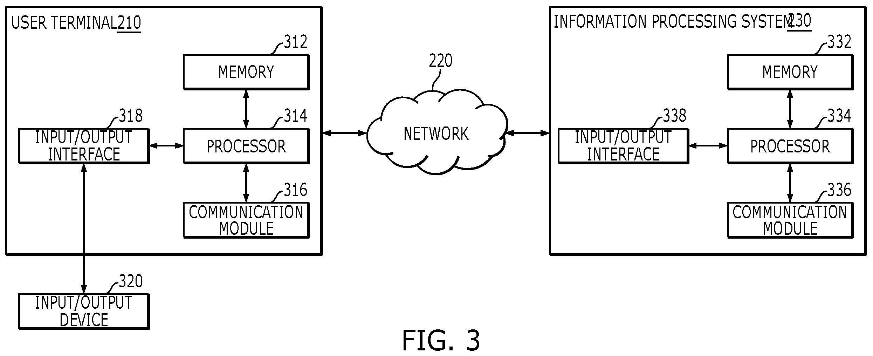

FIG. 3 illustrates a block diagram of internal configurations of the user terminal 210 and the information processing system 230 according to an example of the present disclosure. The user terminal 210 may be any computing device capable of running an application or web browser and performing wired/wireless communication, for example, the mobile phone terminal 210_1, the tablet terminal 210_2, the PC terminal 210_3 in FIG. 2, and so forth. As shown, the user terminal 210 may include a memory 312, a processor 314, a communication module 316, and an input/output interface 318. Similarly, the information processing system 230 may include a memory 332, a processor 334, a communication module 336, and an input/output interface 338. As shown in FIG. 3, the user terminal 210 and the information processing system 230 may communicate information and/or data via the network 220 by using their communication modules 316 and 336, respectively. In addition, the input/output device 320 may input information and/or data into the user terminal 210 or output information and/or data generated from the user terminal 210, through the input/output interface 318.

The memories 312 and 332 may include a non-transitory computer-readable recording medium. According to an example, the memories 312 and 332 may include permanent mass storage devices such as ROM (read only memory), a disk drive, an SSD (solid state drive), or flash memory. In another example, permanent mass storage devices such as ROM, SSD, flash memory, or a disk drive may be separate from the memory and included in the user terminal 210 or the information processing system 230 as independent permanent storage devices. Further, an operating system and at least one program code may be stored in the memories 312 and 332.

These software components may be loaded from a separate computer-readable recording medium into the memories 312 and 332. Such a separate computer-readable recording medium may include, for example, a computer-readable recording medium directly connectable to the user terminal 210 and the information processing system 230, such as a floppy drive, a disk, a tape, a DVD/CD-ROM drive, or a memory card. In another example, the software components may be loaded into the memories 312 and 332 via the communication modules 316 and 336 rather than via a computer-readable recording medium. For example, at least one program may be loaded into the memories 312 and 332 based on a computer program installed by files distributed from developers or a file distribution system providing installation files of applications through the network 220.

The processors 314 and 334 may be configured to process commands of computer programs by performing basic arithmetic, logic, and input/output operations. The commands may be provided to the processors 314 and 334 by the memories 312 and 332 or the communication modules 316 and 336. For example, the processors 314 and 334 may be configured to execute commands received according to program code stored in a storage device such as the memories 312 and 332.

The communication modules 316 and 336 may provide a configuration or function for the user terminal 210 and the information processing system 230 to communicate with each other via the network 220, and a configuration or function for the user terminal 210 and/or the information processing system 230 to communicate with other user terminals or other systems (for example, a separate cloud system). For example, requests or data (e.g., a request for training an image generation model, a request for generating a synthetic image, etc.) generated by the processor 314 of the user terminal 210 according to program code stored in a storage device such as the memory 312 may be delivered to the information processing system 230 via the communication module 316 under its control through the network 220. Conversely, control signals or commands provided by the processor 334 of the information processing system 230 may be received by the user terminal 210 through the communication module 316 and the network 220, via the communication module 336.

The input/output interface 318 may be a means for interfacing with the input/output device 320. As an example, the input device may be a camera including an audio sensor and/or an image sensor, a keyboard, a microphone, a mouse, and so forth, and the output device may be a display, a speaker, a haptic feedback device, and so on. In another example, the input/output interface 318 may be a means for interfacing with a device in which an input and output configuration or function is integrated into a single device, such as a touchscreen. For example, when the processor 314 of the user terminal 210 processes commands of a computer program loaded into the memory 312, a service screen configured using information and/or data provided from the information processing system 230 or another user terminal may be displayed on the display through the input/output interface 318. Although FIG. 3 illustrates the input/output device 320 as separate from the user terminal 210, it may be configured as a single device with the user terminal 210. In addition, the input/output interface 338 of the information processing system 230 may be a means for interfacing with an input or output device (not shown) connected to or included in the information processing system 230. In FIG. 3, the input/output interfaces 318 and 338 are shown as elements separate from the processors 314 and 334, but the present disclosure is not limited thereto, and the input/output interfaces 318 and 338 may be included in the processors 314 and 334.

The user terminal 210 and the information processing system 230 may include more components than those shown in FIG. 3. However, there is no need to show most conventional components explicitly. In an example, the user terminal 210 may be implemented to include at least some of the input/output devices 320 described above. Further, the user terminal 210 may include additional components such as a transceiver, a GPS (Global Positioning System) module, a camera, various sensors, a database, and so forth.

While a program for an artificial neural network model, an image generation application, etc., is operating, the processor 314 may receive text, images, video, voice, and/or actions that are input or selected through an input device such as a touchscreen, keyboard, audio sensor, and/or image sensor including a camera, microphone, etc., connected to the input/output interface 318, and may store them in the memory 312 or provide them to the information processing system 230 via the communication module 316 and the network 220.

The processor 314 of the user terminal 210 may be configured to manage, process, and/or store information and/or data received from the input/output device 320, another user terminal, the information processing system 230, and/or a plurality of external systems. The information and/or data processed by the processor 314 may be provided to the information processing system 230 via the communication module 316 and the network 220. The processor 314 of the user terminal 210 may transmit information and/or data to the input/output device 320 via the input/output interface 318 to output them. For example, the processor 314 may output or display the received information and/or data on a screen of the user terminal 210.

The processor 334 of the information processing system 230 may be configured to manage, process, and/or store information and/or data received from the plurality of user terminals 210 and/or the plurality of external systems. Information and/or data processed by the processor 334 may be provided to the user terminal 210 via the communication module 336 and the network 220.

Hereinafter, the term "processor" will be used to describe at least one processor of the user terminal and/or the information processing system.

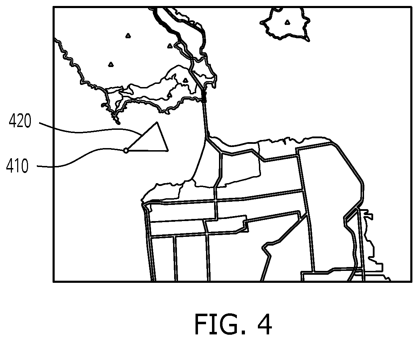

FIG. 4 is a diagram for schematically explaining a process of generating a synthetic image according to an example of the present disclosure. A processor may obtain location information 410. The location information 410 may be information for specifying a location at which a synthetic image is to be generated, for example, latitude, longitude, and information on a searchable location (e.g., a landmark).

The processor may obtain directional information 420 associated with the location information 410. The directional information 420 may include information on a direction in three-dimensional or two-dimensional space, either viewing from the location information 410 or viewing toward the location information 410.

For example, if the processor receives "a terrain viewed from a point 500 meters west of a certain location," the processor may obtain the "certain location" as the location information, and may obtain "viewed from a point 500 meters west" as the directional information.

The processor may obtain a three-dimensional semantic model, which will be described later, by using the location information 410 and the directional information 420, and based thereon, generate content information representing structural information of objects to be generated in the synthetic image (for example, a synthetic image of the terrain viewed from a point 500 meters west of a certain location).

The processor may generate the synthetic image based on the generated content information by using an artificial neural network model, and whenever the location information and/or the directional information change, the processor may generate a corresponding synthetic image. Here, the artificial neural network model may be a generative model trained to generate images in a real-world domain style based on the content information.

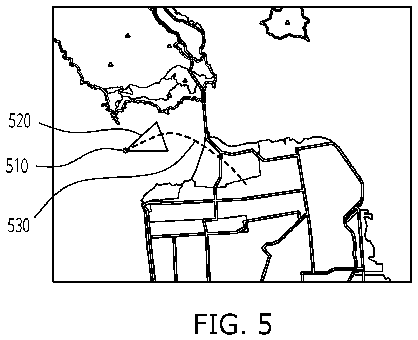

FIG. 5 is a diagram for schematically explaining a process of generating a plurality of synthetic images according to an example of the present disclosure. As described above, when location information and directional information are obtained, the processor may generate a three-dimensional semantic model, content information, etc., and generate a synthetic image based on the content information using an artificial neural network model. Further, the processor may generate a plurality of synthetic images (or a sequence of synthetic images, a video, etc.) by using a camera movement path 530.

Specifically, the processor may generate a first synthetic image based on current location information 510 and directional information 520 through the method described in FIG. 4. In addition, the processor may generate a second synthetic image based on subsequent location information and subsequent directional information on the camera movement path 530. By repeating this process, the processor may generate a plurality of sequential content information according to the camera movement path 530 and generate a plurality of sequential synthetic images based on the plurality of sequential content information.

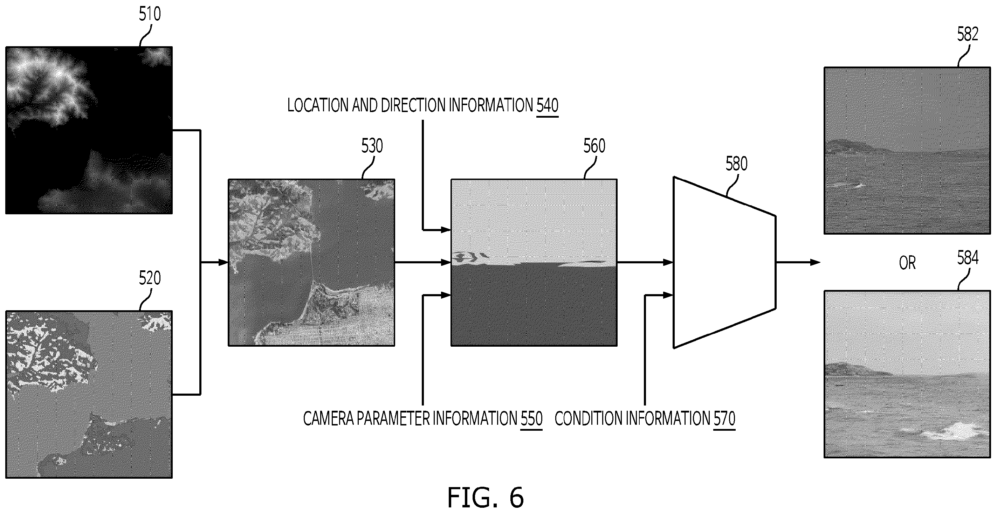

FIG. 6 is a diagram for specifically explaining a method for generating a synthetic image according to an example of the present disclosure. The processor may obtain first location information and first directional information associated with the first location information, and obtain a three-dimensional (3D) semantic model 530 associated with the first location information and the first directional information.

In order to obtain the 3D semantic model 530, the processor may obtain a Digital Elevation Model (DEM) 510 associated with the first location information and the first directional information. The DEM 510 is a three-dimensional terrain model used in Geographic Information Systems (GIS) that numerically represents the elevation of the earth's surface, and may be expressed in a grid format, where each cell represents the surface height of that area.

The processor may obtain satellite geographic information data 520 associated with the first location information and the first directional information. Here, the satellite geographic information data 520 may include semantic data viewed from above (e.g., the sky). Semantic data may be data for describing the meaning or semantics of data related to geographic information. By way of example, it may include data related to land cover, elevation, soil composition, climate, surface components, vegetation, snow, forest layers, glaciers, farmland, whether developed, land reflectance, etc., but the present disclosure is not limited thereto.

The 3D semantic model 530 may be a model generated based on the DEM 510 and the satellite geographic information data 520, and may include three-dimensional structural data and semantic data. In an example, the three-dimensional structural data may be mesh data. The mesh data is structural data used to represent three-dimensional space and may consist of a combination of vertices, edges, and faces. In another example, the three-dimensional structural data may be another type of data representing a three-dimensional structure instead of mesh data. For example, the three-dimensional structural data may be point cloud data or a set of three-dimensional Gaussian kernels. The semantic data is data that describes the meaning of objects or structures in three-dimensional space, and at least a portion of the semantic data may be configured to change according to a target time, and may include, for example, object type information, although the present disclosure is not limited thereto.

Based on the location and directional information 540 and the 3D semantic model 530, the processor may generate first content information 560 representing structural information of objects to be generated in a first synthetic image 582 and/or 584. In an example, the processor may additionally use camera parameter information 550 to generate the first content information 560.

The first content information 560 may be a two-dimensional semantic mask or semantic image obtained by projecting the 3D semantic model according to the location and directional information 540, and it may further reflect view point information through the camera parameter information 550. Here, the camera parameter information 550 may include camera information (e.g., intrinsic parameters, 3 degrees of freedom, etc.), but the present disclosure is not limited thereto.

The processor may generate the first synthetic image 582 and/or 584 based on the first content information 560 by using an artificial neural network model 580. At this time, the processor may generate the first synthetic image 582 and/or 584 based on the first content information 560 and condition information 570 by adding the condition information 570.

The condition information 570 may include at least one of weather information, time information, image type information, or a content modification request (or prompt) associated with the first synthetic image 582 and/or 584 to be generated, but the present disclosure is not limited thereto.

For example, the processor may receive at least one of weather information, time information, or image type information associated with the first synthetic image 582 and/or 584 to be generated, and when generating the first synthetic image 582 and/or 584, the processor may generate the first synthetic image 582 and/or 584 based on the first content information 560 and the at least one of the weather information, time information, or image type information by using the artificial neural network model 580.

In an example, the processor may obtain a modification prompt for changing at least a portion of the structural information of objects included in the first content information 560, and when generating the first synthetic image 582 and/or 584, the processor may generate the first synthetic image based on the first content information 560 and the modification prompt by using the artificial neural network model 580.

In an example, the processor may further receive a camera movement path, and based on the first location information, the first directional information, the camera movement path, and the 3D semantic model 530, the processor may generate a plurality of sequential content information.

The processor may generate a plurality of sequential content information by reflecting the 3D semantic model 530 and the camera movement path, and may generate a plurality of sequential synthetic images based on the first synthetic image and the plurality of content information by using the artificial neural network model.

In doing so, when the processor generates the plurality of sequential synthetic images, it may input the camera movement path as optical flow to the artificial neural network model. Here, the optical flow may include data for estimating the motion of objects by analyzing the movement patterns of pixels between consecutive frames in an image or video to track the movement of objects.

The processor may output the generated first synthetic image 582 and/or 584. Here, the first synthetic image 582 and/or 584 may be a view synthesis image viewed from a position associated with the first location information in a direction associated with the first directional information. In an example, if a plurality of sequential synthetic images are generated, the processor may output the plurality of sequential synthetic images.

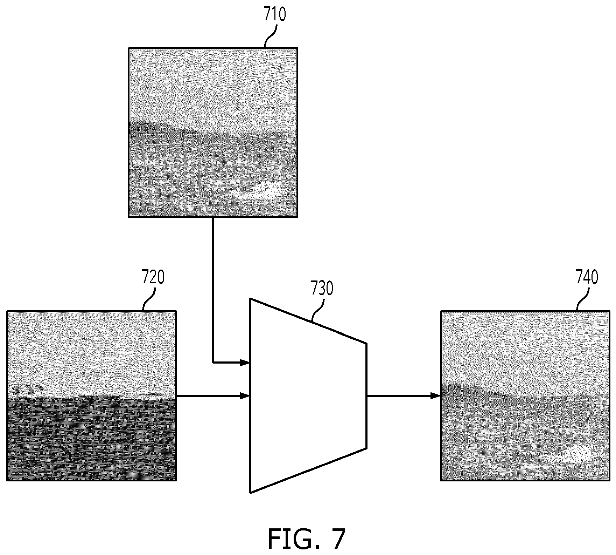

FIG. 7 illustrates a diagram for explaining a method of generating a subsequent synthetic image 740 based on a previous synthetic image 710 according to an example of the present disclosure. The processor may obtain second location information and second directional information associated with the second location information. The processor may generate second content information 720 representing structural information of objects to be generated in the second synthetic image based on the second location information, the second directional information, and the three-dimensional semantic model.

The processor may generate the second synthetic image 740 based on the previously obtained synthetic image 710 (for example, 584 of FIG. 6) and the generated second content information 720 by using an artificial neural network model 730, and then output the generated second synthetic image.

Here, the artificial neural network model 730 may be the same as the artificial neural network model 580 shown in FIG. 6, but the present disclosure is not limited thereto.

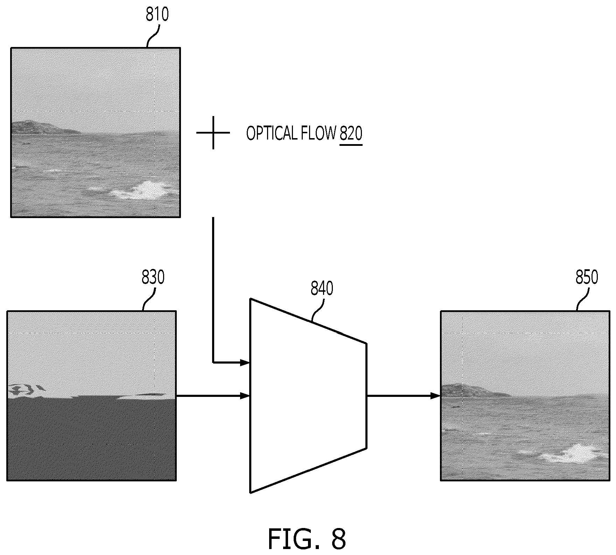

FIG. 8 illustrates a diagram for explaining a method of generating a subsequent synthetic image 850 based on a previous synthetic image 810 and optical flow 820 according to an example of the present disclosure. Referring to FIG. 8, the processor may generate the subsequent synthetic image 850 by using the artificial neural network model 840 based on the previous synthetic image 810, subsequent content information 830, and the optical flow 820.

As described above, the optical flow 820 may include data for estimating the motion of objects by analyzing the movement patterns of pixels between consecutive frames in an image or video to track the movement of objects, and may be obtained via the camera movement path, but the present disclosure is not limited thereto.

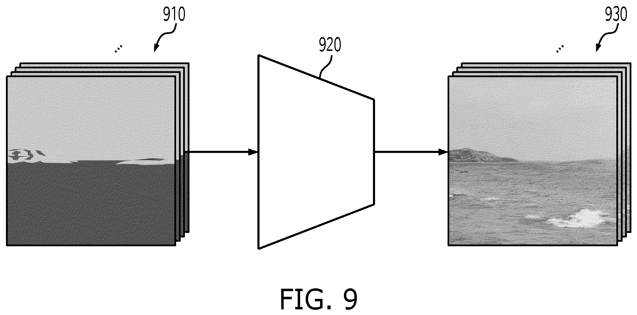

FIG. 9 illustrates a diagram for explaining a method of outputting a plurality of sequential synthetic images 930 (for example, a video) based on a plurality of pieces of sequential content information 910 using an artificial neural network model 920 according to an example of the present disclosure. The processor may receive the plurality of sequential content information 910. Each of the plurality of sequential content information 910 may be generated respectively through location information, directional information, and the three-dimensional semantic model, or may be generated based on the location information, the directional information, the camera movement path, and the three-dimensional semantic model.

The processor may generate the plurality of sequential synthetic images by using the artificial neural network model 920. Here, the plurality of synthetic images 930 may be in a real-world domain style.

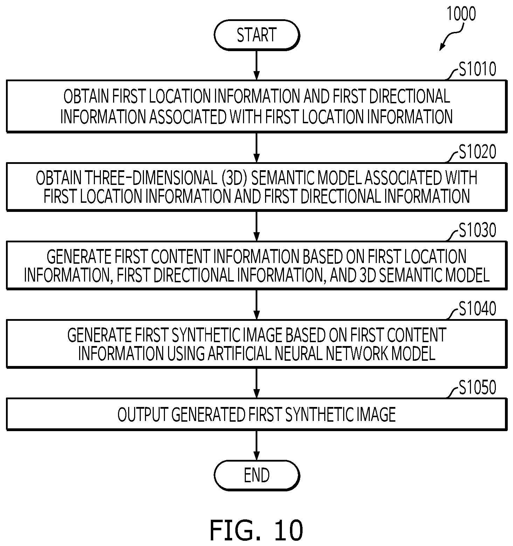

FIG. 10 illustrates a flowchart of a synthetic image generation method 1000 according to an example of the present disclosure. The synthetic image generation method 1000 may be performed by at least one processor of a user terminal and/or an information processing system. First, in step S1010, the processor may obtain first location information and first directional information associated with the first location information.

In step S1020, the processor may obtain a three-dimensional semantic model associated with the first location information and the first directional information. Here, the three-dimensional semantic model may include three-dimensional structural data and semantic data. In an example, the three-dimensional semantic model may be obtained by obtaining a Digital Elevation Model (DEM) associated with the first location information and the first directional information, obtaining satellite geographic information data associated with the first location information and the first directional information, and generating the model based on the Digital Elevation Model and the satellite geographic information data. In addition, the satellite geographic information data may include semantic data viewed from above.

In step S1030, the processor may generate first content information representing structural information of objects to be generated in a first synthetic image based on the first location information, the first directional information, and the three-dimensional semantic model.

In step S1040, the processor may generate the first synthetic image based on the first content information by using an artificial neural network model. Here, the first synthetic image may be a view synthesis image viewed from the position associated with the first location information in the direction associated with the first directional information.

In step S1050, the processor may output the generated first synthetic image.

In an example, the processor may further receive at least one of weather information, time information, or image type information associated with the first synthetic image to be generated. In that case, generating the first synthetic image may include generating the first synthetic image based on the first content information and the at least one of the weather information, time information, or image type information by using the artificial neural network model.

In an example, the processor may obtain second location information and second directional information associated with the second location information, and generate second content information representing structural information of objects to be generated in a second synthetic image based on the second location information, the second directional information, and the three-dimensional semantic model. In that case, the processor may generate the second synthetic image based on the first synthetic image and the second content information by using the artificial neural network model, and may output the generated second synthetic image.

In an example, the processor may further receive a camera movement path. In that case, the processor may generate a plurality of sequential content information based on the first location information, the first directional information, the camera movement path, and the three-dimensional semantic model. Further, the processor may generate a plurality of sequential synthetic images based on the first synthetic image and the plurality of content information by using the artificial neural network model, and may output the plurality of sequential synthetic images.

In an example, at least a portion of the semantic data included in the three-dimensional semantic model may be configured to vary according to a target time.

In an example, the processor may further obtain a modification prompt for changing at least a portion of the structural information of objects included in the first content information. In that case, generating the first synthetic image may include generating the first synthetic image based on the first content information and the modification prompt by using the artificial neural network model.

The flowchart and description above are merely examples and may be implemented differently in some examples. For example, in some examples, the order of respective steps may be changed, some steps may be repeatedly performed, some steps may be omitted, or some steps may be added.

The method described above may be provided as a computer program stored in a computer-readable recording medium for execution on a computer. The medium may be a type of medium that continuously stores a program executable by a computer, or temporarily stores the program for execution or download. In addition, the medium may be a variety of recording means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, etc. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies depending on design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, etc. The instructions may be executable by one or more processors, and may cause the processor(s) to perform certain aspects of the functions described in the present disclosure.

When implemented in software, the techniques may be stored on a computer-readable medium as one or more instructions or codes, or may be transmitted through a computer-readable medium. The computer-readable media include both the computer storage media and the communication media including any medium that facilitates the transmission of a computer program from one place to another. The storage media may also be any available media that may be accessible to a computer. By way of non-limiting example, such a computer-readable medium may include RAM, ROM, EEPROM, CD-ROM or other optical disk storage, magnetic disk storage or other magnetic storage devices, or any other media that can be used to transmit or store desired program code in the form of instructions or data structures and can be accessible to a computer. In addition, any connection is properly referred to as a computer-readable medium.

For example, if the software is sent from a website, server, or other remote sources using coaxial cable, fiber optic cable, twisted pair, digital subscriber line (DSL), or wireless technologies such as infrared, wireless, and microwave, the coaxial cable, the fiber optic cable, the twisted pair, the digital subscriber line, or the wireless technologies such as infrared, wireless, and microwave are included within the definition of the medium. The disks and the discs used herein include CDs, laser disks, optical disks, digital versatile discs (DVDs), floppy disks, and Blu-ray disks, where disks usually magnetically reproduce data, while discs optically reproduce data using a laser. The combinations described above should also be included within the scope of the computer-readable media.

The software module may reside in RAM memory, flash memory, ROM memory, EPROM memory, EEPROM memory, registers, hard disk, removable disk, CD-ROM, or any other form of storage medium known. An exemplary storage medium may be connected to the processor such that the processor may read or write information from or to the storage medium. Alternatively, the storage medium may be integrated into the processor. The processor and the storage medium may exist in the ASIC. The ASIC may exist in the user terminal. Alternatively, the processor and storage medium may exist as separate components in the user terminal.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or apparatus, and storage may be similarly influenced across a plurality of apparatus. Such apparatus may include PCs, network servers, and portable apparatus.

Although the present disclosure has been described in connection with some examples herein, various modifications and changes can be made without departing from the scope of the present disclosure, which can be understood by those skilled in the art to which the present disclosure pertains. In addition, such modifications and changes should be considered within the scope of the claims appended herein.

## Claims

1. A method performed by an apparatus comprising at least one processor, the method comprising:
obtaining (S1010) first location information and first directional information associated with the first location information;
obtaining (S1020) a three-dimensional (3D) semantic model associated with the first location information and associated with the first directional information;
generating (S1030) first content information representing structural information of objects to be generated in a first synthetic image, wherein the first content information is generated based on the first location information, the first directional information, and the 3D semantic model;
generating (S1040) the first synthetic image, based on the first content information, using an artificial neural network model; and
outputting (S1050) the generated first synthetic image,
wherein the 3D semantic model comprises 3D structural data and semantic data.

2. The method of claim 1, wherein the first synthetic image is a view synthesis image viewed, from a location associated with the first location information, in a direction associated with the first directional information.

3. The method of claim 1, further comprising:
receiving at least one of:
weather information associated with the first synthetic image to be generated,
time information associated with the first synthetic image to be generated, or
image type information associated with the first synthetic image to be generated, wherein the generating of the first synthetic image is further based on:
the at least one of the weather information, the time information, or the image type information.

4. The method of claim 1, further comprising:
obtaining second location information and second directional information associated with the second location information;
generating second content information representing structural information of objects to be generated in a second synthetic image, wherein the second content information is generated based on the second location information, the second directional information, and the 3D semantic model;
generating the second synthetic image, based on the first synthetic image and the second content information, using the artificial neural network model; and
outputting the generated second synthetic image.

5. The method of claim 1, further comprising:
receiving a camera movement path;
generating sequential content information, wherein the sequential content information is generated based on the first location information, the first directional information, the camera movement path, and the 3D semantic model;
generating a plurality of sequential synthetic images, based on the first synthetic image and the sequential content information, using the artificial neural network model; and
outputting the plurality of sequential synthetic images.

6. The method of claim 1, further comprising:
obtaining a Digital Elevation Model (DEM) associated with the first location information and associated with the first directional information;
obtaining satellite geographic information data associated with the first location information and associated with the first directional information; and
generating, based on the DEM and the satellite geographic information data, the 3D semantic model, wherein the satellite geographic information data comprises semantic data viewed from above.

7. The method of claim 1, wherein at least a portion of the semantic data in the 3D semantic model is configured to vary according to a target time.

8. The method of claim 1, further comprising:
receiving a modification prompt for changing at least a portion of the structural information of objects in the first content information,
wherein the generating of the first synthetic image comprises:
generating the first synthetic image, based on the first content information and the modification prompt, using the artificial neural network model.

9. A non-transitory computer-readable medium storing computer-readable instructions that, when executed by at least one processor (334), cause an apparatus to:
obtain first location information and first directional information associated with the first location information;
obtain a three-dimensional (3D) semantic model associated with the first location information and associated with the first directional information;
generate first content information representing structural information of objects to be generated in a first synthetic image, wherein the first content information is generated based on the first location information, the first directional information, and the 3D semantic model;
generate the first synthetic image, based on the first content information, using an artificial neural network model; and
output the generated first synthetic image,
wherein the 3D semantic model comprises 3D structural data and semantic data.

10. An information processing system (230) comprising:
a memory (332) storing computer-readable instructions; and
at least one processor (334) connected to the memory (332) and configured to execute the computer-readable instructions that, when executed by the at least one processor (334), cause the information processing system (230) to:
obtain first location information and first directional information associated with the first location information;
obtain a three-dimensional (3D) semantic model associated with the first location information and associated with the first directional information;
generate first content information representing structural information of objects to be generated in a first synthetic image, wherein the first content information is generated based on the first location information, the first directional information, and the 3D semantic model;
generate the first synthetic image, based on the first content information, using an artificial neural network model; and
output the generated first synthetic image,
wherein the 3D semantic model comprises 3D structural data and semantic data.

11. The information processing system (230) of claim 10, wherein the computer-readable instructions, when executed by the at least one processor (334), cause the information processing system (230) to:
receive at least one of:
weather information associated with the first synthetic image to be generated,
time information associated with the first synthetic image to be generated, or
image type information associated with the first synthetic image to be generated;
and
generate the first synthetic image, based on the first content information and the at least one of the weather information, the time information, or the image type information, using the artificial neural network model.

12. The information processing system (230) of claim 10, wherein the computer-readable instructions, when executed by the at least one processor (334), cause the information processing system (230) to:
obtain second location information and second directional information associated with the second location information;
generate second content information representing structural information of objects to be generated in a second synthetic image, wherein the second content information is generated based on the second location information, the second directional information, and the 3D semantic model;
generate the second synthetic image, based on the first synthetic image and the second content information, using the artificial neural network model; and
output the generated second synthetic image.

13. The information processing system (230) of claim 10, wherein the computer-readable instructions, when executed by the at least one processor (334), cause the information processing system (230) to:
receive a camera movement path;
generate sequential content information, wherein the sequential content information is generated based on the first location information, the first directional information, the camera movement path, and the 3D semantic model;
generate a plurality of sequential synthetic images, based on the first synthetic image and the sequential content information, using the artificial neural network model; and
output the plurality of sequential synthetic images.

14. The information processing system (230) of claim 10, wherein the computer-readable instructions, when executed by the at least one processor (334), cause the information processing system (230) to:
obtain a Digital Elevation Model (DEM) associated with the first location information and associated with the first directional information;
obtain satellite geographic information data associated with the first location information and associated with the first directional information; and
generate, based on the DEM and the satellite geographic information data, the 3D semantic model,
wherein the satellite geographic information data comprises semantic data viewed from above.

15. The information processing system (230) of claim 10, wherein the computer-readable instructions, when executed by the at least one processor (334), cause the information processing system (230) to:
receive a modification prompt for changing at least a portion of the structural information of objects in the first content information; and
generate the first synthetic image, based on the first content information and the modification prompt, using the artificial neural network model.
